(19)

Europäisches
Patentamt
European
Patent Office
Office européen
des brevets

(11) **EP 1 947 507 A1**

(12) **EUROPEAN PATENT APPLICATION**
published in accordance with Art. 158(3) EPC

(43) Date of publication:
**23.07.2008 Bulletin 2008/30**

(51) Int Cl.:
*G03B 5/00* (2006.01)          *H04N 5/232* (2006.01)

(21) Application number: **06796450.2**

(86) International application number:
**PCT/JP2006/316090**

(22) Date of filing: **16.08.2006**

(87) International publication number:
**WO 2007/023718 (01.03.2007 Gazette 2007/09)**

(84) Designated Contracting States:
**DE FR GB**

(30) Priority: **26.08.2005   JP 2005246407**

(71) Applicant: **VICTOR COMPANY OF JAPAN, LTD.**
**Kanagawa-ku**
**Yokohama-shi,**
**Kanagawa 221-8528 (JP)**

(72) Inventors:
• **OTAKE, Yoshichi**
**Victor Company Of Japan Limited**
**Kanagawa 221-8528 (JP)**

• **NAKAAKI, Yasufumi**
**Victor Company Of Japan Limited**
**Kanagawa 221-8528 (JP)**

(74) Representative: **Geyer, Ulrich F.**
**Wagner & Geyer**
**Patentanwälte**
**Gewürzmühlstrasse 5**
**80538 München (DE)**

(54) **IMAGE SHAKE CORRECTING DEVICE**

(57)     An image stabilizing device is provided, in a video camera, with a compensating part 2 having movable prisms 10A, 10B rotatable independently of each other. The movable prisms 10A, 10B are rotated in response to shakes of the video camera due to hand tremor.

**FIG. 3**

(a)

(b)

(c)

**Description**

### TECHNICAL FIELD

The present invention relates to an image stabilizing device applicable to an equipment having optical lenses, such as video camera, electronic still camera and still camera, for compensating unstable image motion due to shake of the equipment.

### BACKGORUND OF ART

There has been conventionally known a video camera equipment having a camera body equipped with an image stabilizing device for compensating hand tremor at picking up images in order to make the images easily viewable at playback. Patent Document No. 1 (Japanese Patent Publication Laid-open No.9-51469) shows an image stabilizing device adopting active prism method.

An active prism used in Patent Document No. 1 has a structure in which between two sheets of glass plates connected to each other through an expandable bellows of special film, there is charged liquid having the substantially same refraction index as that of the glasses.

This active prism is arranged between a CCD image sensor and an objective lens of a lens unit for leading a subject image to the CCD image sensor to compensate hand tremor by changing respective tilting angles of respective glass plates (referred to as "apex angles") to a video camera body in a vertical or horizontal direction.

Therefore, the image stabilizing device adopting the active prism technique has advantages of small power consumption, easiness for miniaturization, less deterioration in resolution and relatively wide compensation area.

With the prevention of "shake" in a playback image by compensating hand tremor in this active prism method, it becomes possible to realize a compact and lightweight "handy-type" video camera unit with high image quality.

Further, if arranging an active prism in front of the lens unit, then the compensation is completed on the side of a subject irrespective of the lens unit. In other words, this active prism would become effective to all lens system in theory, exhibiting its expanded versatility. Further, the active prism may be attached to an exterior of the video camera unit.

### DISCLOSURE OF THE INVENTION

However, the active prism has the above-mentioned structure in which between two glass plates connected to each other through the expandable bellows of special film, there is charged liquid having the substantially same refraction index as that of the glasses. Thus, there is required a technique of completely enclosing the liquid in the bellows without producing air bubbles. This leads to complication in structure and difficulty in fabrication.

Under the situation, there has been long-awaited advent of an image stabilizing device which has image stabilizing effect similar to that of the active prism, with simpler constitution and easy fabrication.

In consideration of the above-mentioned issue, an object of the present invention is to provide an image stabilizing device with simpler constitution and easy fabrication.

In order to attain the above object, according to a main aspect of the present invention, there is provided an image stabilizing device that optically compensates shake of images picked up by an imaging equipment having an optical lens, the device comprising: a shake detector that detects shake of the imaging equipment; a pair of movable refractive elements arranged on an incident side of the optical lens to change a refracting direction of light incident on the optical lens; two rotators that rotate the movable refractive elements perpendicularly to an optical axis, respectively and independently of each other; and a controller that rotation-controls the two rotators to cancel the shake detected by the shake detector.

### BRIEF DESCRIPTION OF THE DRAWINGS

Fig. 1 is a block diagram showing the constitution of an image stabilizing device in accordance with an embodiment of the present invention.

Fig. 2 are schematic views showing a compensating part of the image stabilizing device shown in Fig. 1, in which Fig. 2(a) is a schematic front view and Fig. 2(b) is a schematic side view.

Fig. 3 are structural views of the compensating part shown in Fig. 2, in which Fig. 3(a) is a front view, Fig. 3(b) a sectional view viewed in a direction B of Fig. 2(a), and Fig. 3(c) is a sectional view viewed in a direction A of Fig. 2(a).

Fig. 4 is a perspective view of a fixed prism that the compensating part of Fig. 3 includes.

Fig. 5 are arrangement views of actuators and sensors that the compensating part of Fig. 3 includes, in which Fig.

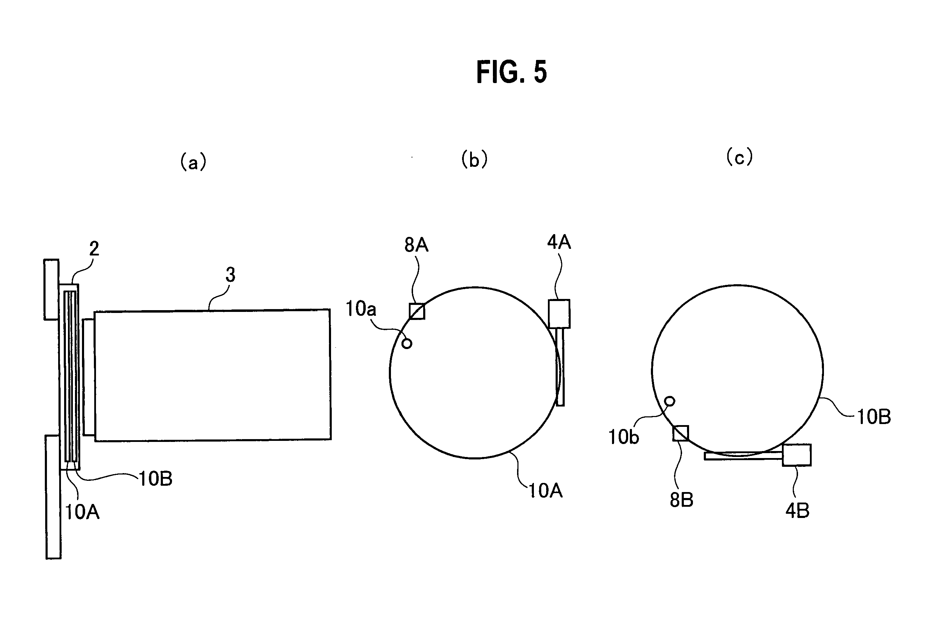

5(a) is a schematic side view, Fig. 5(b) an arrangement view of an actuator and a sensor of a movable prism 10A, and Fig. 5(c) is an arrangement view of an actuator and a sensor of a movable prism 10B.

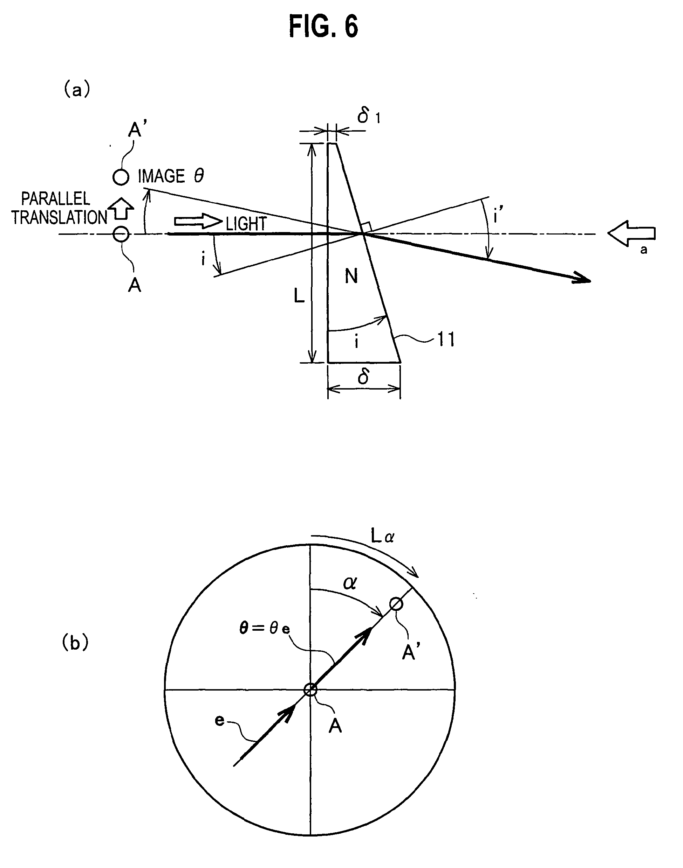

Fig. 6 are views explaining the movement of a subject image by a prism, in which Fig. 6(a) is a view explaining refraction of light by the prism and Fig. 6(b) is a view of the prism of Fig. 6(a) viewed in its front direction.

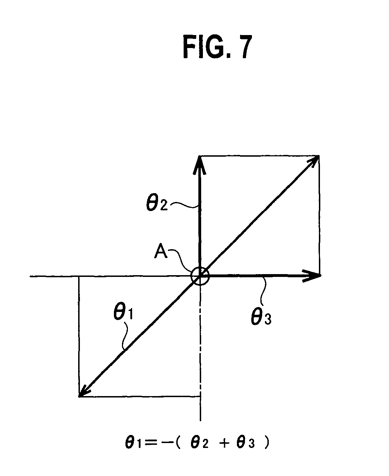

Fig. 7 is a view showing image shift vectors when movable prisms do not rotate.

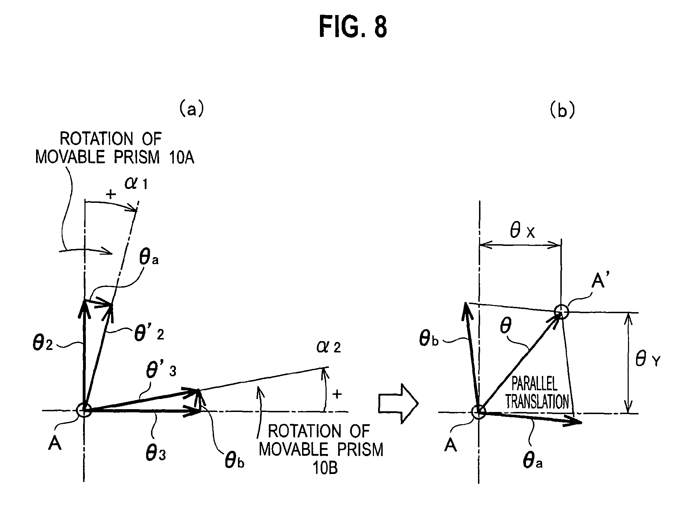

Fig. 8 are views explaining the movement of a subject image when the movable prisms rotate, in which Fig. 8(a) is a view showing the image shift vectors when the movable prisms rotate and Fig. 8(b) is a view where displacements of the image shift vectors of Fig. 8(a) are picked up.

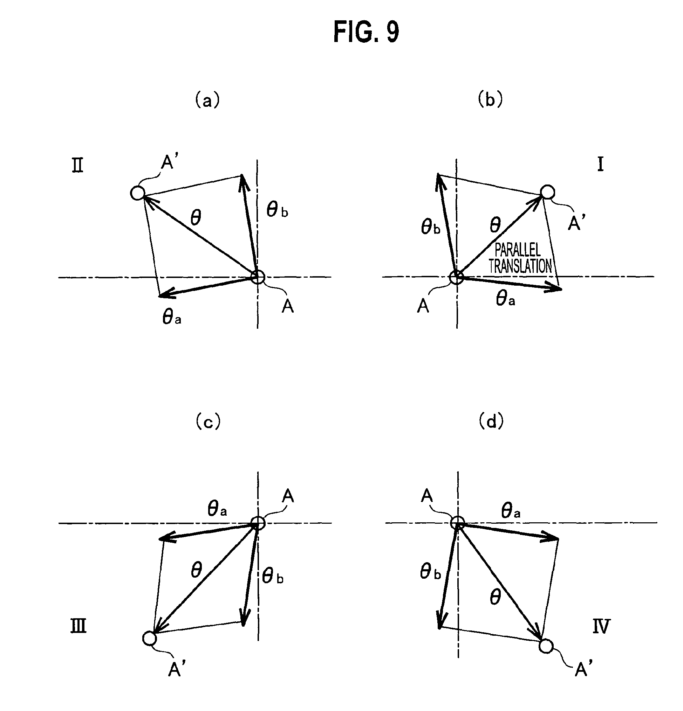

Fig. 9 are views showing parallel translating forms of a subject image (subject), in which Fig. 9(a) is a view of the subject image moved to a second quadrant, Fig. 9(b) a view of the subject image moved to a first quadrant, Fig. 9(c) a view of the subject image moved to a third quadrant, and Fig. 9(d) is a view of the subject image moved to a fourth quadrant.

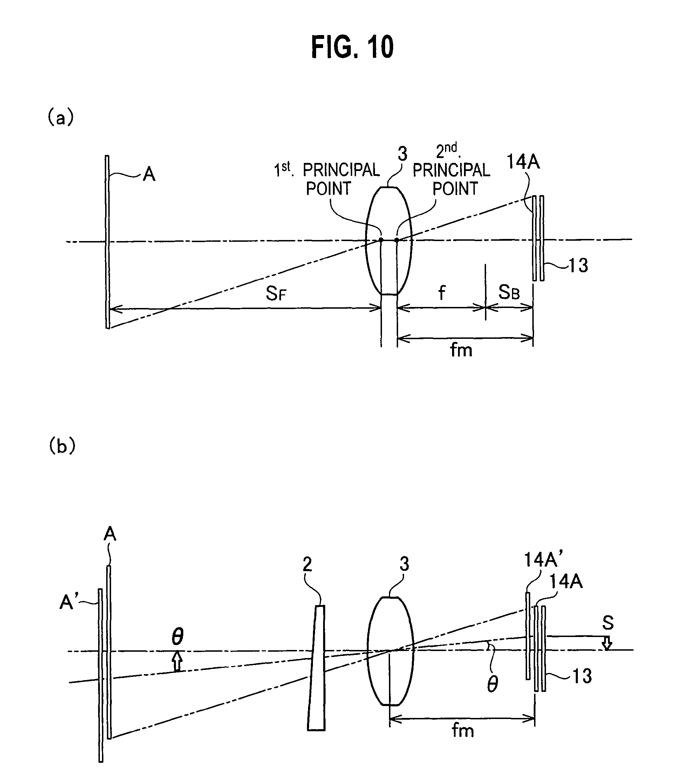

Fig. 10 are views explaining a equivalent focal distance and a shift angle, in which Fig. 10(a) is a view explaining the equivalent focal distance and Fig. 10(b) is a view explaining a shift distance.

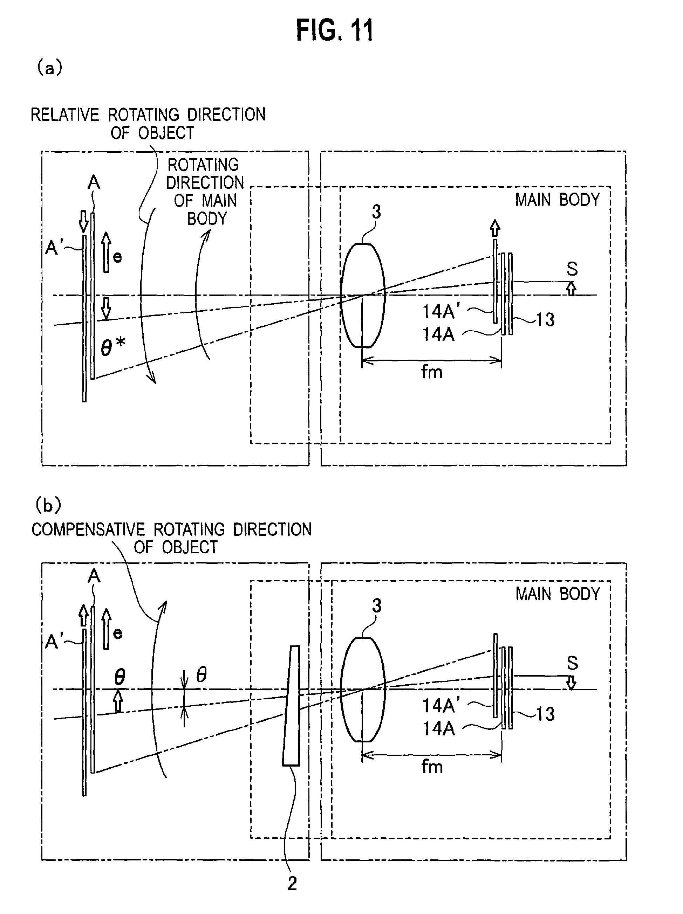

Fig. 11 are views explaining the compensation of hand tremor, in which Fig. 11 (a) is a view explaining the movement of a subject image due to hand tremor and Fig. 11 (b) is a view explaining the compensation of the movement of the subject image due to hand tremor.

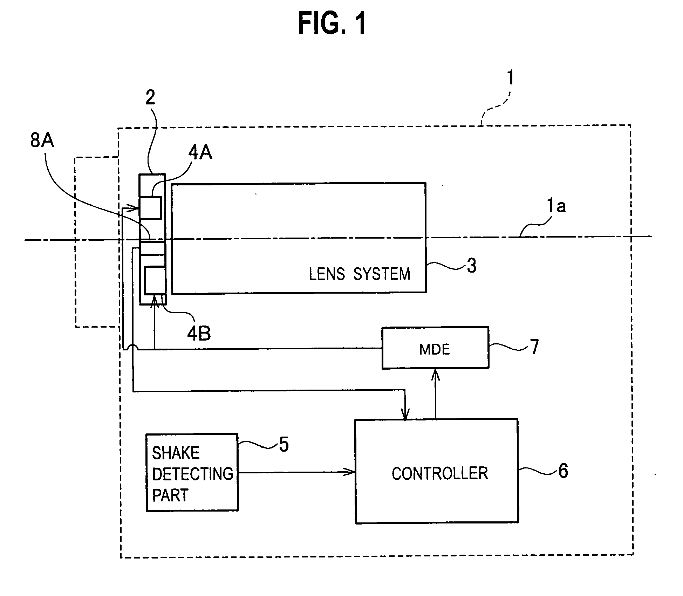

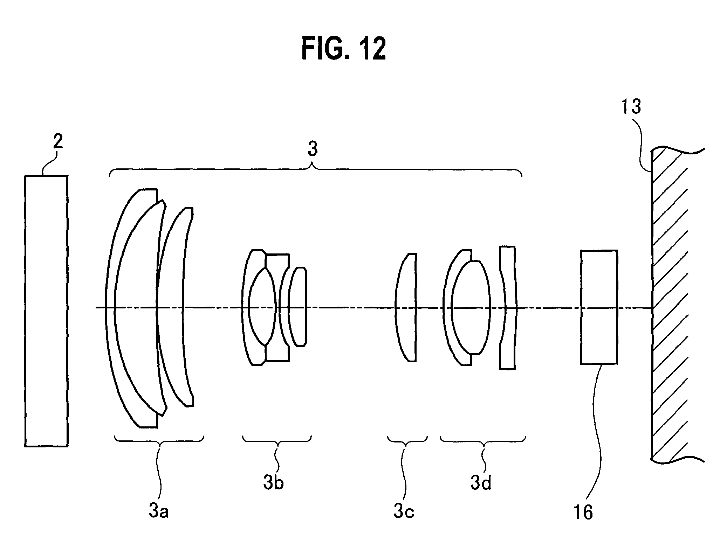

Fig. 12 is a view showing the lens system of Fig. 1.

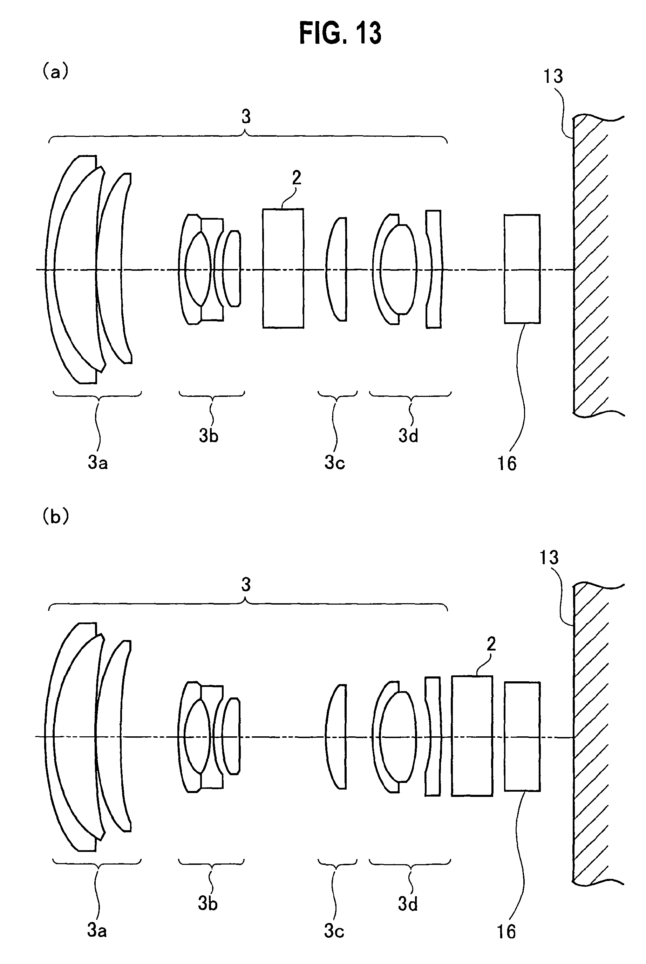

Fig. 13 are views showing the arrangement of the compensating part, the lens system and others of Fig. 1, in which Fig. 13(a) is a view showing the compensating part arranged in the lens system and Fig. 13(b) is a view showing the compensating part arranged behind the lens system.

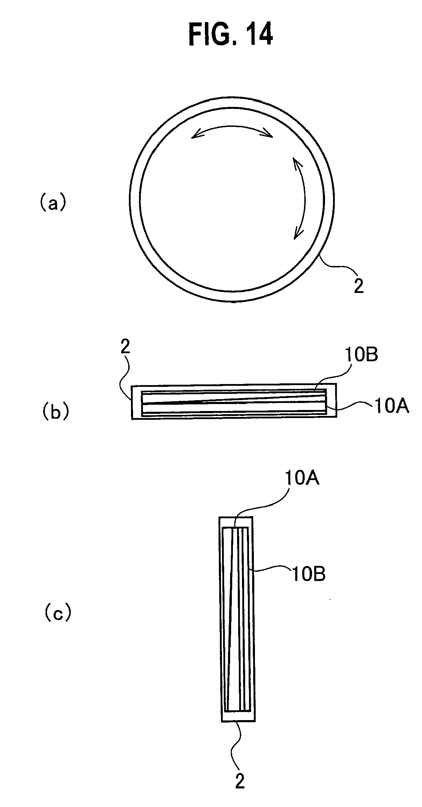

Fig. 14 are views showing the compensating part without a fixed prism as another constitution of the compensating part of the present invention, in which Fig. 14(a) is a front view of the compensating part, Fig. 14(b) a plan view of the part, and Fig. 14(c) is a side view of the part.

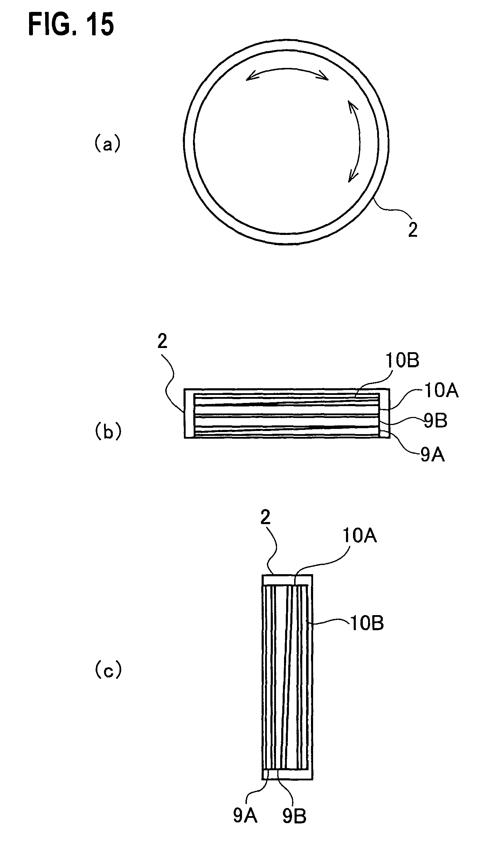

Fig. 15 are views showing the compensating part with two sheets of fixed prisms as the other constitution of the compensating part of the present invention, in which Fig. 15(a) is a front view of the compensating part, Fig. 15(b) a plan view of the part, and Fig. 15(c) is a side view of the part.

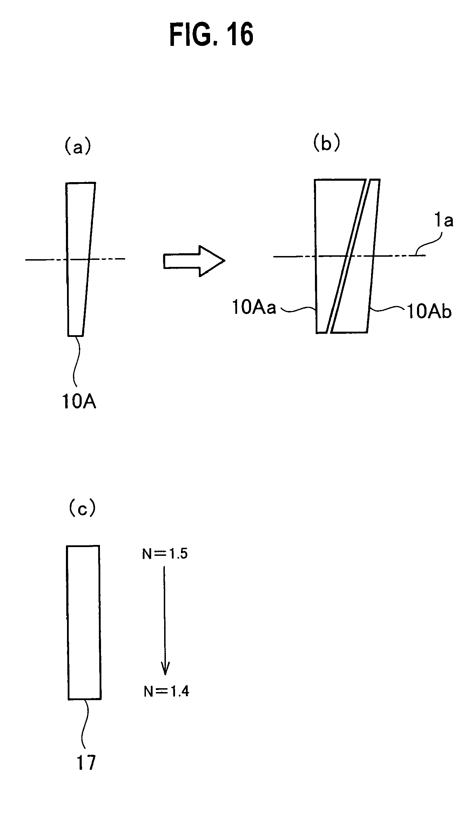

Fig. 16 are views showing the other constitution of the prism of the present invention, in which Fig. 16(a) is a view showing a simplex prism, Fig. 16(b) a view of a compound prism, and Fig. 16(c) is a view showing a parallel plate having prism effect.

## BEST MODE FOR CARRYING OUT THE INVENTION

There will be described a preferred embodiment for embodying an image stabilizing device of the present invention with reference to drawings.

Fig. 1 is a block diagram showing the constitution of an image stabilizing device in accordance with an embodiment of the present invention. The image stabilizing device of the present invention is provided in, for example, a well-known video camera 1.

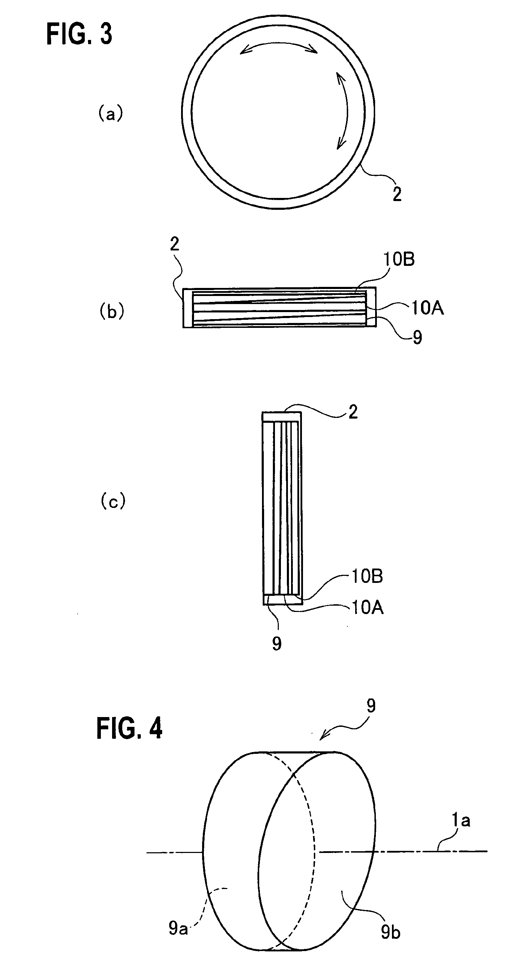

The image stabilizing device in the embodiment of the present invention includes a compensating part 2 having a pair of movable prisms 10A, 10B (Fig. 3(b)) independently rotatable about an optical axis 1a as a rotating center and a fixed prism 9 (Fig. 3(b)), a lens system 3 for taking pictures of a subject, actuators 4A, 4B for rotating the movable prisms 10A, 10B in pairs respectively and independently, a shake detecting part 5 for detecting shake of the video camera 1 due to hand tremor etc. and generating hand-tremor signals, a controller 6 that transmits control signals to the actuators 4A, 4B for their rotation control so as to cancel the shake in response to the shake signal from the shake detecting part 5, a motor drive electronic circuit (MDE) 7 for driving the actuators 4A, 4B in response to the control signals from the controller 6 and sensors 8A, 8B (Figs.5(b) and 5(c)) for detecting rotations of the movable prisms in the compensating part 2.

The shake detecting part 5 comprises first and second angular speed sensors having respective detecting faces opposed in vertical and horizontal directions of the video camera 1. The first and the second angular speed sensors are provided to respectively detect angular speeds derived from a horizontal shake direction and a vertical shake direction and also formed by well-known angular speed sensors, such as gyro sensors.

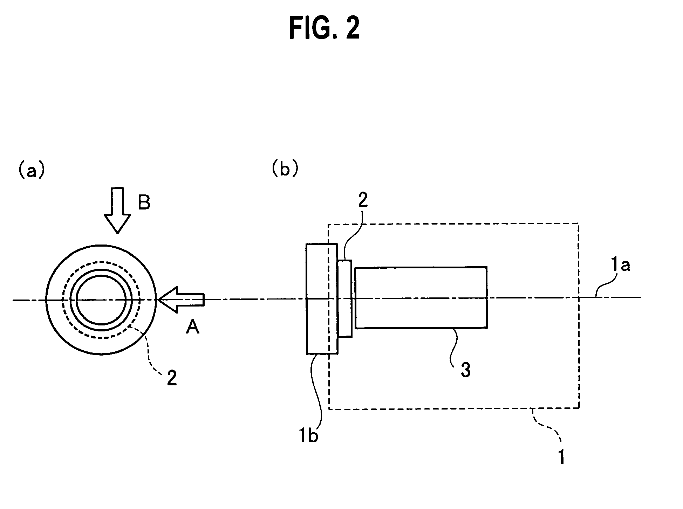

Figs. 2 to 5 are views explaining the operation of detecting rotations or rotating conditions of the prisms, although details of a rotator and a detector are eliminated since they are well known.

Fig. 2 are schematic views showing the compensating part 2 of the image stabilizing device of Fig. 1. Fig. 2(a) is a schematic front view of the part, while Fig. 2(b) is a schematic side view of the part. Fig. 3 are structural views of the compensating part of Fig. 2. Fig. 3(a) is a front view. Fig. 3(b) is a sectional view viewed in a direction B of Fig. 2(a), while Fig. 3(c) is a sectional view viewed in a direction A of Fig. 2(a). Fig. 4 is a perspective view of the fixed prism arranged in the compensating part of Fig. 3.

As shown in Figs. 3(a) to 3(c), the compensating part 2 includes the fixed prism 9 immovable in position and the movable prisms 10A, 10B rotatable about an optical axis as the rotating center.

As shown in Fig. 4, the fixed prism 9 includes a first face 9a perpendicular to the optical axis 1a and a second face 9b being a flat surface opposed to the first face 9a at a minute angle slant. The fixed prism 9 is made of acryl etc. The movable prisms 10A, 10B are also similar to the prism 9 in terms of shape and material.

Fig. 5 are arrangement views of actuators and sensors that the compensating part of Fig. 2 does have. Fig. 5 (a) is a schematic side view, Fig. 5(b) an arrangement view of an actuator and a sensor of the movable prism 10A, and Fig. 5(c) is an arrangement view of an actuator and a sensor of the movable prism 10B. The actuators and the sensors are attached to the compensating part 2. As shown in Figs. 5(b) and 5(c), the actuator 4A and the sensor 8A are provided for the movable prism 10A, while the actuator 4B and the sensor 8B are provided for the movable prism 10B.

The actuators 4A, 4B rotate the movable prisms 10A, 10B in response to the control signals from the controller 6. The actuators 4A, 4B comprise e.g. compact pulse motors, compact linear motors, compact ultrasonic motors or the like and have small driving torques respectively.

The sensors 8A, 8B, which are formed by e.g. compact photo interrupters, MR elements, hall elements or the like, detect the rotating conditions of the movable prisms 10A, 10B and output the information about the rotating conditions to the controller 6.

If adopting the compact photo interrupters for the sensors 8A, 8B, pulse motors are employed as the actuators 4A, 4B. The movable prisms 10A, 10B are covered, on their circumferences, with masking materials on which holes 10a, 10b are formed respectively. The holes 10a, 10b are positioned so as to accord with the sensors 8A, 8B when the movable prisms 10A, 10B are brought into their initial positions, respectively.

The photo interrupter includes an infrared-emitting diode and a photo transistor. The photo interrupter is arranged so as to interpose the movable prism 10A or 10B between the infrared-emitting diode and the photo transistor.

When the device is powered on to rotate the movable prisms 10A, 10B, the compact photo interrupters detect their original positions since the photo transistors receive lights of the infrared-emitting diodes passing through the holes 10a, 10b. Assuming that the number of pulse is set to 0 at the original position of the prism, the information about the rotating conditions of the movable prisms 10A, 10B is obtained by counting the number of pulses at rotating,

If adopting MR elements or hall elements for the sensors 8A, 8B, magnetic bodies are attached to the movable prisms 10A, 10B respectively, in lieu of the holes 10a, 10b.

The MR elements or the hall elements detect field variances caused by the magnetic bodies rotating together with the movable prisms 10A, 10B to thereby detect the information about the rotating conditions.

Fig. 6 are views explaining the movement of a subject image by a prism. Fig. 6(a) is a view explaining refraction of light by the prism, while Fig. 6(b) is a view of the prism of Fig. 6(a) viewed in its front direction (arrow a). In Fig. 6(b), the prism 11 of Fig. 6(a) is rotated by an angle "$\alpha$". As shown in Figs. 6(a) and 6(b), an image of a subject "A" is shifted (of parallel translation) to a subject "A'".

In Figs. 6(a) and 6(b), "i" denotes a prism angle (incident angle of light) of the prism 11, "L" a prism length, "$\delta$" a prism height, "$\delta_1$" a prism height at the thinnest part, "N" a refraction index, "i'" a refraction angle of light, "$\theta$" an image shift angle (deflection angle), "$\alpha$" a rotation angle of the prism, "$L_\alpha$" a rotation length of the prism, "vector e" a unit vector in the direction of image shifting direction "$\theta$", and "vector $\theta$" an image shift vector. Assume here that the suffix "vector" represents a vector quantity. In Figs. 6 to 11, these vector quantities are represented by bold faces in place of suffix "vector". Here, the following relationship is established:

$$\textbf{vector } \theta = \theta \textbf{ vector e.} \qquad (1)$$

Fig. 6(a) shows that, among the prism angle (incident angle) "i", the refraction angle "i'" and the image shift angle (deflection angle) "$\theta$", there is established:

$$\theta = i' - i. \qquad (2)$$

In addition, Snell's law leads to

$$\sin i' = N \sin i. \qquad (3)$$

Assuming now that the prism angle "i" is small, the equation (3) can be approximated as

$$i' = N\,i. \tag{4}$$

Therefore, substituting the equation (4) into the equation (2) gives

$$\theta = (N - 1)\,i. \tag{5}$$

Further, Fig. 6(b) shows that, between the prism rotation length "$L_\alpha$" and the prism rotation angle "$\alpha$", there is established:

$$L_\alpha = (L/2)\,\alpha, \tag{6}$$

that is,

$$\alpha = (2/L)\,L_\alpha. \tag{7}$$

Furthermore, the following relationship is established as well:

$$\delta = L\,\tan i + \delta_1, \tag{8}$$

that is,

$$L = (\delta - \delta_1) \,/\, \tan i. \tag{9}$$

Fig. 7 is a view showing the image shift vectors in case that the movable prisms 10A, 10B do not rotate. In Fig. 7, vector "$\theta_1$", vector "$\theta_2$" and vector "$\theta_3$" are image shift vectors by the fixed prism 9, the movable vectors 10A and 10B, respectively. As shown in Fig. 7, the positions of the fixed prism 9 and the movable prisms 10A, 10B are established so that vector "$\theta_1$" cancels a synthetic vector of vector "$\theta_2$" and vector "$\theta_3$". Thus, as the fixed prism 9 and the movable prisms 10A, 10B in all become equivalent to a parallel flat plate, the compensating part 2 has an incident angle equal to an emitting angle, so that a subject image does not move.

Fig. 8 are views explaining the movements of the subject image in case that the movable prisms 10A, 10B rotate. Fig. 8(a) is a view showing the image shift vectors when the movable prisms rotate, while Fig. 8(b) is a view where displacements of the image shift vectors of Fig. 8(a) are picked up.

Assume in Fig. 8(a), vector "$\theta'_2$" and vector "$\theta'_3$" represent image shift vectors when the movable prisms 10A, 10B rotate by angles "$\alpha_1$" and "$\alpha_2$", respectively. Here, it is assumed that rotating directions shown in Fig. 8(a) are positive directions of angles "$\alpha_1$" and "$\alpha_2$", respectively. Suppose that the following relationships are established:

$$\text{vector } \theta_a = \text{vector } \theta'_2 - \text{vector } \theta_2, \tag{10}$$

$$\text{vector } \theta_b = \text{vector } \theta'_3 - \text{vector } \theta_3. \tag{11}$$

Then, as shown in Fig. 8(b), the image of the subject "A" move to "A'" in translation. Then, as a synthetic vector of vector "$\theta_a$" and vector "$\theta_b$", the image shift vector is described as

$$\text{vector } \theta = \text{vector } \theta_a + \text{vector } \theta_b = (\theta_X, \theta_Y). \tag{12}$$

Then, Figs. 8(a) and 8(b) show that the following relationships are established:

$$\theta_X = \theta_2 \sin\alpha_1 - \theta_3 (1 - \cos \alpha_2), \qquad (13)$$

$$\theta_Y = \theta_3 \sin\alpha_2 - \theta_2 (1 - \cos \alpha_1). \qquad (14)$$

Here, consider a vector having components "$\alpha_1$" and "$\alpha_2$", that is, vector $\alpha = (\alpha_1, \alpha_2)$. Resolving the equations (13) and (14) with respect to "$\alpha_1$", "$\alpha_2$" gives

$$\alpha_1 = \pm \cos^{-1}(C/D) + \alpha_1^{*}, \qquad (15)$$

$$\alpha_2 = \pm \cos^{-1}\{[(\theta_X + \theta_3) + \theta_2 \sin \alpha_1]/\theta_3\} \qquad (16)$$

where

$$C = [A^2 + B^2 + \theta_2{}^2 - \theta_3{}^2]/2\theta_2, \qquad (17)$$

$$D = (A^2 + B^2)^{1/2}, \qquad (18)$$

$$\alpha_1^{*} = \pm\cos^{-1}(A/D), \quad (\text{selecting sign of B}) \quad (19)$$

$$A = (\theta_Y + \theta_2), \text{ and} \qquad (20)$$

$$B = (\theta_X + \theta_3). \qquad (21)$$

Fig. 9 are views showing parallel translating forms of a subject image (subject). Fig. 9(a) is a view of the subject image moved to a second quadrant, Fig. 9(b) a view of the subject image moved to a first quadrant, Fig. 9(c) a view of the subject image moved to a third quadrant, and Fig. 9(d) is a view of the subject image moved to a fourth quadrant.

When the subject image moves into the first quadrant, as shown in Fig. 9(b), the inequalities $\alpha_1 > 0$ and $\alpha_2 > 0$ are established because $\theta_X > 0$ and $\theta_Y > 0$. Further, when the subject image moves into the second quadrant, as shown in Fig. 9(a), the inequalities $\alpha_1 < 0$ and $\alpha_2 > 0$ are established because $\theta_X < 0$ and $\theta_Y > 0$. Still further, when the subject image moves into the third quadrant, as shown in Fig. 9(c), the inequalities $\alpha_1 < 0$ and $\alpha_2 < 0$ are established because $\theta_X < 0$ and $\theta_Y < 0$. Again, when the subject image moves into the fourth quadrant, as shown in Fig. 9(d), the inequalities $\alpha_1 > 0$ and $\alpha_2 < 0$ are established because $\theta_X > 0$ and $\theta_Y < 0$.

Fig. 10 are views explaining a equivalent focal distance and a shift distance. Fig. 10(a) is a view explaining the equivalent focal distance, while Fig. 10(b) is a view explaining the shift distance.

In Fig. 10(a), "$S_F$" denotes a distance between a subject "A" and a first principal point of the lens system 3, and "f" denotes a focal length of the lens system 3. Then, the equivalent focal distance "$f_m$" is identical to a distance between a second principal point of the lens system 3 and a CCD 13 for imaging a subject image 14A, and is represented by

$$f_m = f + S_B \qquad (22)$$

where

$$S_B = f^2 / S_F. \qquad (23)$$

Suppose that the compensating part 2 is inserted so that the subject image 14A is displaced to a subject image 14A' with an image shift angle "$\theta$", as shown in Fig. 10(b). Then, a shift distance "S" is expressed by

$$S = f_m \tan \theta. \qquad (24)$$

Fig. 11 are views explaining the compensation of hand tremor. Fig. 11 (a) is a view explaining the movement of a subject image due to hand tremor, while Fig. 11 (b) is a view explaining the compensation of the movement of the subject image due to hand tremor.

As shown in Fig. 11 (a), an upward rotating of a main body such as video camera would cause the subject A to be rotated relatively downward. As a result, the subject image 14A is shifted to the subject image 14A' running off the CCD 13. Here, supposing a shake angle as "$\theta^*$" and a unit vector in the direction of shake as "vector $e^*$" (= - vector e), a shake-angle vector "vector $\theta^*$" is represented by

$$\text{vector } \theta^* = \theta^* \cdot \text{vector } e^*. \qquad (25)$$

Fig. 11 (b) shows that a situation in which the compensating part 2 is inserted in front of the lens system 3. Then, if the image shift vector "$\theta$" and the shake-angle vector "$\theta^*$" satisfy with the shake compensating condition:

$$\text{vector } \theta = - \text{vector } \theta^*, \qquad (26)$$

the subject image 14A' is moved to the position of the subject image 14A, so that the shake is compensated.
Next, the operation of the image stabilizing device in the embodiment of the present invention will be described.

The sensors 8A, 8B detect the rotation of the movable prisms 10A, 10B and output the information about rotation to the controller 6.

The shake detecting part 5 detects shake of the video camera 1 due to hand tremor and outputs the shake in the form of a shake signal to the controller 6. Based on the shake signal, the controller 6 calculates a shake angle vector "$\theta^*$", representing the magnitude of the shake and its direction, by

$$\text{vector } \theta^* = ( \theta_X^*, \theta_Y^*). \qquad (27)$$

Here, using the equation (26) gives

$$(\theta_X, \theta_Y) = (- \theta_X^*, - \theta_Y^*). \qquad (28)$$

The controller 6 calculates a vector $\alpha$ based on the equations (15) to (21) and outputs control signals to the motor drive electronic circuit 7 so that the rotating angles of the movable prisms 10A, 10B become "$\alpha_1$", "$\alpha_2$", respectively.

Then, the motor drive electronic circuit 7 drives the actuators 4A, 4B in response to the control signals from the controller 6, while the actuators 4A, 4B rotate the movable prisms 10A, 10B so that their rotating angles become "$\alpha_1$", "$\alpha_2$", respectively.

According to the image stabilizing device in the embodiment of the present invention, as an unsteady image motion due to hand tremor is compensated by rotating the movable prisms 10A, 10B, it is possible to provide an image stabilizing device with its simple structure and easy fabrication.

Note, although the lens system 3 is illustrated in the form of one block in Fig. 1, the lens system 3 is actually formed by a plurality of lenses in group. Fig. 12 is a view showing the lens system of Fig. 1. Fig. 13(a) is a view showing the structure where the compensating part is arranged in the lens system. Fig. 13(b) is a view showing the structure where the compensating part is arranged behind the lens system.

The lens system 3 comprises first to fourth lens groups 3a to 3d. Although eliminated in the Behind the lens system 3, there are an optical low-pass filter 16 for suppressing noise (false signal) and the CCD 13 for imaging a subject image although they are not shown in Fig. 1.

In Fig. 1, the compensating part 2 is arranged in front of the lens system 3 as shown in Fig. 12, although the compensating part 2 may be arranged inside the lens system 3, as shown in Fig. 13(a). Alternatively, as shown in Fig. 13(b), the compensating part 2 may be arranged behind the lens system 3. Consequently, as it becomes possible to arrange the compensating part 2 in a narrow part of light flux passing through the lens system 3, the compensating part 2 can be small-sized.

In the above-mentioned embodiment, the compensating part 2 includes the fixed prism 9 and the movable prisms 10A, 10B, although the fixed prism 9 may be deleted from the device. Alternatively, an additional fixed prism may be subjoined to the device.

As another constitution of the compensating part of the present invention, Fig. 14 illustrates a compensating part with no fixed prism. Fig. 14(a) is a front view of the part, Fig. 14(b) a plan view, and Fig. 14(c) is a side view. As the other constitution of the compensating part of the present invention, Fig. 15 illustrates a compensating part with two sheets of fixed prisms. Fig. 15(a) is a front view of the part, Fig. 15(b) a plan view, and Fig. 15(c) is a side view.

In case of Fig. 15, the positions of respective prisms are adjusted so that the compensating part 2 in its initial state has an incident angle equal to an emitting angle. In common with Fig. 14 and Fig. 15, the other operation is similar to that in the above-mentioned embodiment, accomplishing the similar effect.

As it will be understood from the equations (10) and (11), although the image is misaligned in the initial state in case of Fig. 14, the misalignment is not concerned with the compensation of unsteady image motion directly. Although the device is constructed that the incident angle on the compensating part 2 in the initial state becomes equal to the emitting angle in cases of Figs. 3 and 15, such a formation comes from the purpose of minimizing the influence of prism effect at image stabilizing on chromatic aberration. In case of Fig. 14, the chromatic aberration gets large in comparison with the cases of Figs. 3 and 15. However, according to the constitution with no prism of Fig. 14, it is possible to minimize the device by shortening a length of the compensating part 2 in the direction of the optical axis.

Further, in order to balance suppression of the influence on chromatic aberration and miniaturization of the compensating part 2, it is also possible to adjust a prism angle of the fixed prism 9 so that the chromatic aberration is level with at an intermediate position between the chromatic aberration in cases of Figs. 3 and 15 and that in case of Fig. 14.

In the above-mentioned embodiment, additionally, each prism may be in the form of a simplex prism or a compound prism. Alternatively, the prism may be formed by a parallel plate having prism effect. Fig. 16 illustrates the other constitution of the prism of the present invention. Fig. 16(a) is a view showing a simplex prism, Fig. 16(b) a view of a compound prism, and Fig. 16(c) is a view showing a parallel plate having prism effect.

For instance, as shown in Fig. 16(b), the movable prism 10A may be in the form of a compound prism produced by bonding two sheets of prisms 10Aa, 10Ab with minute angles. In case of a compound prism, it is possible to greaten an angle of each prism unit, allowing a minute-angle prism, that would be made from a simplex prism with difficulty, to be manufactured with easiness.

Further, as shown in Fig. 16(c), each prism may be replaced by a parallel plate 17 having prism effect with a refraction index N changed from N = 1.5 to N= 1.4. The prism requires a control of its inclination angle in production, while the parallel plate 17 is easy to be machined.

**INDUSTRIAL APPLICABILITY**

The image stabilizing device of the present invention includes a pair of movable refractive elements changing a refracting direction of light incident on the optical lens to thereby detect shake produced in the imaging equipment, and further rotates the movable refractive elements perpendicularly to the optical axis and independently of each other to thereby compensate an unsteady image motion. Therefore, according to the present invention, it is possible to provide an image stabilizing device with both simple constitution and easy fabrication.

**Claims**

1. An image stabilizing device that optically compensates shake of images picked up by an imaging equipment having an optical lens, the device comprising:

a shake detector that detects shake of the imaging equipment;

a pair of movable refractive elements arranged on an incident side of the optical lens to change a refracting direction of light incident on the optical lens;

two rotators that rotate the movable refractive elements perpendicularly to an optical axis, respectively and independently of each other; and

a controller that rotation-controls the two rotators to cancel the shake detected by the shake detector.

2.  The image stabilizing device of claim 1, wherein at least one of the pair of movable refractive elements is a compound prism formed by two or more prisms laid on each other in the direction of the optical axis.

3.  The image stabilizing device of claim 1 or 2, further comprising a fixed refractive element fixed in proximity to the pair of movable refractive elements, wherein
    when rotating angles of the pair of movable refractive elements are constant angles, a difference between an incident angle on a refractive-element group of the pair of movable refractive elements and the fixed refractive element and an emitting angle of the refractive-element group is less than a difference between an incident angle on the pair of movable refractive elements and an emitting angle thereof.

4.  The image stabilizing device of claim 3, wherein the fixed refractive element is a compound prism formed by two or more prisms laid on each other in the direction of the optical axis.

# FIG. 1

LENS SYSTEM

MDE

SHAKE DETECTING PART

CONTROLLER

# FIG. 2

(a)

(b)

**FIG. 3**

(a)

2

(b)

2

10B
10A
9

(c)

2

10B
10A

9

**FIG. 4**

9

1a

9a

9b

# FIG. 5

(a)                        (b)                        (c)

EP 1 947 507 A1

# FIG. 6

(a)

(b)

# FIG. 7

$$\theta_1 = -(\theta_2 + \theta_3)$$

# FIG. 8

(a)

ROTATION OF
MOVABLE PRISM 10A

(b)

# FIG. 9

(a)

(b)

(c)

(d)

# FIG. 10

(a)

(b)

# FIG. 11

(a)

RELATIVE ROTATING DIRECTION
OF OBJECT

ROTATING
DIRECTION
OF MAIN
BODY

A

A'

e

$\theta *$

3

MAIN BODY

S

14A'
14A

13

fm

(b)

COMPENSATIVE ROTATING DIRECTION
OF OBJECT

A

A'

e

$\theta$

$\theta$

3

MAIN BODY

S

14A'
14A

13

fm

2

# FIG. 12

EP 1 947 507 A1

# FIG. 13

(a)

(b)

EP 1 947 507 A1

# FIG. 14

(a)

2

(b)

2

10B

10A

(c)

10A

10B

2

22

# FIG. 15

(a)

2

(b)

2

10B
10A
9B
9A

(c)

2

10A

10B

9A    9B

# FIG. 16

(a)

(b)

1a

10Aa

10Ab

10A

(c)

N=1.5

N=1.4

17

<table>
<tr><td colspan="2"><strong>INTERNATIONAL SEARCH REPORT</strong></td><td>International application No.</td></tr>
<tr><td colspan="2"></td><td>PCT/JP2006/316090</td></tr>
</table>

A. CLASSIFICATION OF SUBJECT MATTER
*G03B5/00(2006.01)i, H04N5/232(2006.01)i*

According to International Patent Classification (IPC) or to both national classification and IPC

B. FIELDS SEARCHED

Minimum documentation searched (classification system followed by classification symbols)
G03B5/00, H04N5/232

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 03-094214 A (Asahi Optical Co., Ltd.),<br>19 April, 1991 (19.04.91),<br>Page 4, upper right column, line 16 to lower<br>left column, line 11; Fig. 1<br>& US 005461513 A     & GB 00235788 A<br>& DE 004028359 A | 1,3<br>2,4 |
| X<br>Y | JP 04-352124 A (Sanyo Electric Co., Ltd.<br>et al.),<br>07 December, 1992 (07.12.92),<br>Par. No. [0034]; Fig. 11<br>(Family: none) | 1<br>2-4 |

| [X] Further documents are listed in the continuation of Box C. | [ ] See patent family annex. |
|---|---|

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 September, 2006 (28.09.06) | Date of mailing of the international search report<br>10 October, 2006 (10.10.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/316090

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 63-169614 A  (Opt, Inc.),<br>13 July, 1988 (13.07.88),<br>Page 2, upper right column, line 20 to page 3,<br>lower right column, line 2; Figs. 2 to 4<br>(Family: none) | 1<br>2-4 |
| X | JP 2004-301939 A  (Sony Corp.),<br>28 October, 2004 (28.10.04),<br>Par. No. [0117]; Fig. 10<br>(Family: none) | 1 |
| X | JP 10-254008 A  (Sony Corp.),<br>25 September, 1998 (25.09.98),<br>Par. No. [0020]; Fig. 1<br>(Family: none) | 1 |
| X | JP 11-146260 A  (Canon Inc.),<br>28 May, 1999 (28.05.99),<br>Par. Nos. [0012], [0013]; Fig. 2<br>(Family: none) | 1 |
| X | JP 2003-207813 A  (Ricoh Co., Ltd.),<br>25 July, 2003 (25.07.03),<br>Par. No. [0152]; Figs. 33, 34<br>(Family: none) | 1 |
| A | JP 60-027278 A  (Nippon Hoso Kyokai),<br>12 February, 1985 (12.02.85),<br>Full text; all drawings<br>(Family: none) | 1-4 |

Form PCT/ISA/210 (continuation of second sheet) (April 2005)

**EP 1 947 507 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9051469 A